# FASCICULE DE BREVET EUROPEEN

(11) **EP 1 052 524 B1**
(45) Date de publication et mention de la délivrance du brevet: **18.12.2002**
(21) Numéro de dépôt: 00400716.7
(22) Date de dépôt: 15.03.2000
(51) Int. Cl.: G01V 8/14

(54) **Cellule optique bichromatique**
Bichromatische optische Zelle
Bichromatic optical cell

(30) Priorité: 23.04.1999 FR 9905224
(43) Date de publication de la demande: 15.11.2000
(73) Titulaire: Schneider Electric Industries SAS, 92500 Rueil-Malmaison (FR)
(72) Inventeur: Guillot, Alain,Ing., 16730 Fleac (FR); Couillaud, Frédéric, Ing., 16000 Angouleme (FR)

(56) Documents cités:
- EP-A- 0 005 852
- EP-A- 0 329 083
- EP-A- 0 923 140
- DE-U- 29 711 259
- US-A- 4 649 270

## Description

La présente invention concerne une cellule optique bichromatique apte à détecter un objet soit par interruption d'une réflexion causée par un réflecteur, sans exploitation de l'incidence du faisceau reçu, dans un mode dit reflex, soit par réflexion sur l'objet avec exploitation d'une variation d'incidence du faisceau reçu, - par effet de triangulation -, dans un mode dit de proximité.

En fonction de la distance de l'objet à détecter, de sa brillance ou de sa couleur, voire des conditions locales de détection, il est souhaitable d'employer dans certains cas une cellule reflex et dans d'autres cas une cellule de proximité. Les cellules usuelles conçues pour fonctionner en mode reflex ne peuvent pas fonctionner en mode proximité et vice-versa.

Il a cependant été proposé, par le document EP- 329 083, une cellule bichromatique à large capacité de détection. Cette cellule, en l'occurrence à émissions rouge et infrarouge, est combinée à un réflecteur spécial absorbant l'infrarouge, et comprend un composant récepteur spécial à deux photodiodes dédiées l'une à la lumière rouge et l'autre à la lumière infrarouge. Il a aussi été imaginé une cellule bichromatique permettant de détecter des objets brillants dans le seul mode reflex (document FR-2 442 457). Outre cet inconvénient de ne pas pouvoir fonctionner en mode proximité, une telle cellule requiert un réflecteur spécifique pour éliminer l'une des longueurs d'onde. Or de tels réflecteurs spéciaux sont coûteux.

Une cellule optique permettant de détecter un objet soit dans le mode reflex, soit dans le mode proximité a été décrite dans le document US-4 649 270 et dans le document non publié antérieurement EP-923 140.

L'invention a pour but de rendre une cellule photoélectrique apte à fonctionner en mode reflex ou en mode proximité, par des moyens peu coûteux et efficaces, excluant notamment le besoin d'un réflecteur spécifique.

L'invention concerne une cellule photoélectrique comprenant deux émetteurs aptes à engendrer respectivement un premier faisceau et un deuxième faisceau de longueurs d'onde différentes, ainsi qu'un récepteur disposé de manière à recevoir sous une incidence fixe ou variable un faisceau, influençable par un objet, de l'un ou l'autre émetteur.

Selon l'invention, dans un premier mode de fonctionnement, notamment du type reflex polarisé, le premier faisceau est réfléchi par un réflecteur ordinaire en étant interrompu lorsque se présente un objet, la cellule comprenant des moyens de polarisation du premier faisceau ; dans un deuxième mode de fonctionnement, notamment de type proximité, le deuxième faisceau est réfléchi lorsque se présente un objet avec un axe incliné variable selon la distance de l'objet et reçu par le récepteur délivrant deux signaux électriques dont le rapport varie selon une fonction monotone de la distacne de l'objet et la cellule est dotée de moyens de sélection du premier mode de fonctionnement, ou du deuxième mode de fonctionnement, qui active l'un ou l'autre des émetteurs selon le mode choisi.

De préférence, le récepteur présente au moins deux voies de sortie reliées à un circuit de traitement et aptes à délivrer des signaux respectifs dont le rapport varie selon une fonction monotone de la distance de l'objet, tandis que les moyens de sélection de fonctionnement sont aptes à bloquer l'une ou l'autre des voies de sortie du récepteur et/ou à configurer, c'est-à-dire à rendre totalement ou partiellement active, une aire optoréceptrice du récepteur. La sélection du mode de fonctionnement de la cellule peut s'effectuer automatiquement ou de manière volontaire.

La description va être faite ci-après d'un mode de réalisation non limitatif de l'invention, en regard du dessin annexé.

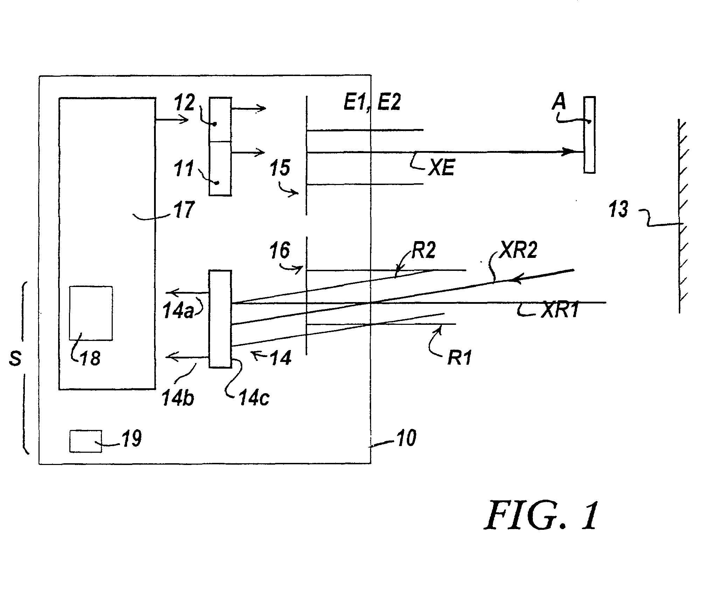

La figure 1 représente schématiquement une cellule bichromatique conforme à l'invention.

La cellule optique 10 est capable de fonctionner en mode reflex M1, ou en mode de proximité M2. Le mode de fonctionnement M1,M2 de la cellule est choisi à l'aide de moyens de sélection S.

La cellule 10 comprend deux éléments optiques émetteurs 11,12 capables d'émettre respectivement un faisceau E1 de longueur d'onde λ1 et un faisceau E2 de longueur d'onde λ2 différente de λ1. Il peut s'agir pour E1 de lumière rouge et pour E2 de lumière infrarouge. Les émetteurs 11,12 peuvent être réalisés soit à l'aide de deux composants distincts, soit à l'aide de deux sources lumineuses rassemblées dans un même composant. Lorsqu'il s'agit de composants distincts, ils peuvent être associés à un même axe d'émission XE au moyen d'une lame semi-transparente ou autre système optique approprié à l'élaboration d'une image de source unique à partie de sources distinctes.

Le faisceau E1 est réfléchi en mode reflex par un réflecteur ordinaire 13, en étant interrompu lorsque se présente un objet A, et le faisceau E2 est réfléchi en mode proximité lorsque se présente l'objet A. Un élément récepteur 14 est sensible au faisceau résultant R1,R2. Le faisceau émis E1,E2 traverse un filtre 15 polarisant la seule lumière de longueur d'onde λ1, mais pas celle de longueur d'onde λ2, et le faisceau réfléchi R1,R2 traverse un filtre 16 polarisant sous λ1, mais pas sous λ2. Il convient d'observer que la cellule décrite n'utilise pas de réflecteur spécial.

L'élément récepteur 14 est agencé de manière à pouvoir délivrer un signal de présence du réflecteur 13 ou de distance de l'objet A aussi bien en mode reflex polarisé M1, le faisceau réfléchi étant dans l'axe XR1, qu'en mode de proximité (triangulation) M2, où le faisceau réfléchi a un axe incliné variable XR2. L'élément récepteur 14 comprend une surface optosensible dont l'aire active est configurable de manière à accepter le faisceau R1 (λ1) aussi bien que le faisceau R2 (λ2), dont l'angle d'incidence, et donc la position sur la surface, varie avec la distance de l'objet A. Dans le présent exemple, l'élément récepteur 14 est un composant à deux sorties 14a,14b, par exemple du genre PSD, délivrant deux signaux électriques sa,sb dont la variation relative est analogique de la distance de l'objet, ou un autre composant - ou groupe de composants - dont l'aire optosensible active est configurable en fonction du mode sélectionné et/ou dont une sortie est blocable en fonction du mode sélectionné (par exemple le mode reflex).

Un circuit de traitement 17 est prévu pour alimenter les émetteurs 11,12, engendrer les signaux électriques d'émission, analyser les signaux électriques de réception sa,sb délivrés sur les deux sorties 14a,14b du récepteur 14 et, en conséquence, activer l'un ou l'autre émetteur 11,12 et configurer le récepteur 14. L'analyse en question peut notamment s'effectuer par comparaison avec un seuil du rapport des signaux des voies 14a,14b, rapport qui varie en mode proximité de façon monotone avec la distance de l'objet.

Les moyens de sélection S comportent un organe de sélection 18 qui agit sur les émetteurs et le récepteur pour adapter la cellule à un fonctionnement en mode reflex ou en mode proximité. Ainsi, l'organe de sélection 18 va inhiber l'émetteur non utile dans le mode sélectionné, en activant l'émetteur 11 et désactivant l'émetteur 12 en mode reflex, et inversement en mode proximité. Il agit aussi sur le récepteur 14 pour l'adapter au mode sélectionné, par exemple en bloquant l'une de ses voies de sortie 14a,14b, ou en configurant son aire optoréceptrice 14c de manière à la rendre totalement ou partiellement active.

Les moyens S de sélection de fonctionnement peuvent aussi comporter un sélecteur volontaire 19, à commande manuelle ou à distance. Ce sélecteur peut être mécanique ou électrique.

## Revendications

1. Cellule optique bichromatique, comprenant deux émetteurs (11,12) aptes à engendrer respectivement un premier faisceau (E1) et un deuxième faisceau (E2) de longueurs d'onde différentes (λ1,λ2), ainsi qu'un récepteur (14) disposé de manière à recevoir sous une incidence fixe ou variable un faisceau, réfléchi ou influençable par un objet, provenant de l'un ou l'autre émetteur,
***caractérisée par le fait* que**
- dans un premier mode de fonctionnement (M1), notamment du type reflex polarisé, le premier faisceau (E1) est réfléchi par un réflecteur ordinaire (13) en étant interrompu lorsque se présente un objet (A), la cellule comprenant des moyens (15,16) de polarisation du premier faisceau (E1),
- dans un deuxième mode de fonctionnement (M2), notamment de type proximité, le deuxième faisceau est réfléchi lorsque se présente un objet (A) avec un axe incliné variable selon la distance de l'objet et reçu par le récepteur (14) délivrant deux signaux électriques dont le rapport varie selon une fonction monotone de la distance de l'objet et
- la cellule est dotée de moyens (S) de sélection du premier mode (M1) de fonctionnement ou du deuxième mode (M2) de fonctionnement, qui active l'un ou l'autre des émetteurs (11,12) selon le mode choisi.

2. Cellule selon la revendication 1, **caractérisée par le fait que** les deux émetteurs (11,12) sont rassemblés dans un même composant.

3. Cellule selon la revendication 1, **caractérisée par le fait que** les deux émetteurs (11,12) sont des composants distincts.

4. Cellule selon la revendication 1, **caractérisée par le fait qu'**elle comprend un circuit de traitement (17) et que le récepteur (14) présente au moins deux voies de sortie (14a,14b) reliées au circuit de traitement (17) et aptes à délivrer des signaux respectifs (sa,sb) dont le rapport varie selon une fonction monotone de la distance de l'objet, les moyens (S) de sélection de fonctionnement étant aptes à bloquer l'une ou l'autre des voies de sortie (14a,14b) du récepteur (14) et/ou à rendre totalement ou partiellement active une aire optoréceptrice (14c) du récepteur (14).

5. Cellule selon la revendication 1, **caractérisée par le fait qu'**elle comprend un circuit de traitement (17) et que les moyens (S) de sélection de fonctionnement comportent un circuit de sélection (18), et que le circuit de traitement (17) est relié à au moins deux sorties (14a,14b) du récepteur (14), analyse la valeur des signaux (sa,sb) engendrés sur ces sorties et agit sur le circuit de sélection (18), lequel inhibe le fonctionnement de l'émetteur (11,12) non utile au mode sélectionné et le cas échéant adapte le récepteur (14) au mode sélectionné.

6. Cellule selon la revendication 1, **caractérisée par le fait que** les moyens (S) de sélection de fonctionnement comportent un sélecteur volontaire (19) à commande manuelle ou à distance.

## Claims

1. Bichromatic optical cell, comprising two emitters (11, 12) capable respectively of generating a first beam (E1) and a second beam (E2) of different wavelengths (λ1, λ2), and a receiver (14) arranged in a way to receive, at a fixed or a variable angle of incidence, a beam, reflected or able to be influenced by an object, coming from one or other emitter, **characterized by** the fact that
- in a first operating mode (M1), particularly of the polarized reflex type, the first beam (E1) is reflected by an ordinary reflector (13), being interrupted when an object (A) is confronted, the cell comprising means (15, 16) for polarizing the first beam (E),
particularly of the proximity type,
- in a second operating mode (M2), particularly of the proximity type, the second beam is reflected, when an object (A) is confronted, with an axis variably inclined according to the distance of the object and is received by the receiver (14) delivering two electrical signals the ratio of which varies according to a monotone function of the distance of the object, and
- the cell is equipped with selection means (S) for the first operating mode (M1) or the second operating mode (M2), which activates one or other of the emitters (11, 12) depending on the chosen mode.

2. Cell according to Claim 1, **characterized by** the fact that the two emitters (11, 12) are brought together within one and the same component.

3. Cell according to Claim 1, **characterized by** the fact that the two emitters (11, 12) are separate components.

4. Cell according to Claim 1, **characterized by** the fact that it comprises a processing circuit (17) and that the receiver (14) has at least two output channels (14a, 14b) connected to the processing circuit (17) and capable of supplying respective signals (sa, sb) the ratio of which varies in accordance with a monotone function of the distance of the object, the means (S) of operational selection being capable of blocking one or other of the output channels (14a, 14b) from the receiver (14) and/or of rendering totally or partially active an optical receiving area (14c) of the receiver (14).

5. Cell according to Claim 1, **characterized by** the fact that it comprises a processing circuit (17) and that the means (S) of operational selection comprise a selection circuit (18), and that the processing circuit (17) is connected to at least two outputs (14a, 14b) from the receiver (14), analyses the value of the signals (sa, sb) generated on these outputs, and acts upon the selection circuit (18), which inhibits the operation of the emitter (11, 12) not useful for the selected mode and, if the need arises, adapts the receiver (14) to the selected mode.

6. Cell according to Claim 1, **characterized by** the fact that the means (S) of operational selection include an optional selector (19), controlled manually or remotely.

## Patentansprüche

1. Bichromatische optische Zelle, die zwei Sender (11,12) umfasst, die in der Lage sind, ein erstes Strahlenbündel (E1) beziehungsweise ein zweites Strahlenbündel (E2) mit unterschiedlichen Wellenlängen (λ1,λ2) zu erzeugen, und einen Empfänger (14) umfasst, der so angeordnet ist, dass er unter einem feststehenden oder variablen Einfall ein Strahlenbündel empfangen kann, das zurückgestrahlt wird oder von einem Objekt beeinflusst wird und von dem einen oder anderen Sender abgegeben wird,
**dadurch gekennzeichnet, dass**
- in einem ersten Betriebsmodus (M1), insbesondere im polarisierten Reflex-Modus, das erste Strahlenbündel (E1) durch einen gewöhnlichen Reflektor (13) zurückgestrahlt wird und unterbrochen wird, wenn ein Objekt (A) auftritt, wobei die Zelle Mittel (15,16) zur Polarisation des ersten Strahlenbündels (E1) aufweist,
- in einem zweiten Betriebsmodus (M2), insbesondere im Naheffektmodus, das zweite Strahlenbündel mit einer entsprechend der Entfernung des Objekts variablen geneigten Achse reflektiert wird, wenn ein Objekt (A) auftritt und es vom Empfänger (14), der zwei elektrische Signale liefert, deren Verhältnis entsprechend einer gleichförmigen Funktion der Entfernung des Objekts variiert, aufgenommen wird, und
- die Zelle mit Mitteln (S) zur Auswahl des ersten Betriebsmodus (M1) oder des zweiten Betriebsmodus (M2), der den einen oder anderen Sender (11,12), entsprechend dem gewählten Modus, aktiviert, versehen ist.

2. Zelle gemäß dem Anspruch 1, **dadurch gekennzeichnet, dass** die beiden Sender (11,12) in ein und demselben Bauelement angeordnet sind.

3. Zelle gemäß dem Anspruch 1, **dadurch gekennzeichnet, dass** es sich bei den beiden Sendern (11,12) um verschiedene Bauelemente handelt.

4. Zelle gemäß dem Anspruch 1, **dadurch gekennzeichnet, dass** sie einen Verarbeitungskreis (17) aufweist und dass der Empfänger (14) mindestens zwei Ausgangskanäle (14a,14b) umfasst, die mit dem Verarbeitungskreis (17) verbunden und in der Lage sind, entsprechende Signale (sa,sb) zu liefern, deren Verhältnis entsprechend einer gleichförmigen Funktion der Entfernung des Objekts variiert, wobei die Mittel (S) zur Betriebsauswahl in der Lage sind, den einen oder anderen Ausgangskanal (14a, 14b) des Empfängers (14) zu blockieren und/oder eine optische Empfänger-Grundfläche (14c) des Empfängers (14) vollkommen oder teilweise zu aktivieren.

5. Zelle gemäß dem Anspruch 1, **dadurch gekennzeichnet, dass** sie einen Verarbeitungskreis (17) umfasst und dass die Mittel (S) zur Betriebsauswahl einen Auswahlkreis (18) umfassen, wobei der Verarbeitungskreis (17) mit mindestens zwei Ausgängen (14a,14b) des Empfängers (14) verbunden ist, den Wert der Signale (sa, sb), die an diesen Ausgängen erzeugt werden, analysiert und auf den Auswahlkreis (18) wirkt, welcher den Betrieb des ungeeigneten Senders (11,12) im ausgewählten Modus hemmt und den Empfänger (14) gegebenenfalls an den ausgewählten Modus anpasst.

6. Zelle gemäß dem Anspruch 1, **dadurch gekennzeichnet, dass** die Mittel (S) zur Betriebsauswahl einen manuell betätigten oder fernbetätigten Wahlschalter (19) aufweisen.
